Europäisches Patentamt

European Patent Office

Office européen des brevets

(11) Publication number: **0 390 210**
**A1**

# EUROPEAN PATENT APPLICATION

(21) Application number: 90106185.3

(22) Date of filing: 30.03.90

(51) Int. Cl.5: **F16H 61/22, B60K 20/02,**
**//F16H59:54,F16H59:74**

(30) Priority: 31.03.89 JP 80854/89
31.03.89 JP 80855/89

(43) Date of publication of application:
**03.10.90 Bulletin 90/40**

(84) Designated Contracting States:
**DE GB**

(71) Applicant: **NISSAN MOTOR CO., LTD.**
**No.2, Takara-cho, Kanagawa-ku**
**Yokohama-shi Kanagawa-ken 221(JP)**

Applicant: **FUJI KIKO COMPANY LIMITED**
**1-13, Nihonbashihon-cho 3-chome Chuo-Ku**
**Tokyo(JP)**

(72) Inventor: **Shirahama, Katsunori**
**4955-1, Iiyama**
**Atusgi-shi, Kanagawa-ken(JP)**
Inventor: **Ishizuki, Masaharu**
**30-25-403 Sagamigaoka 6-chome**
**Zama-shi, Kanagawa-ken(JP)**

Inventor: **Yamamoto, Yoshimi, c/o Fuji Kiko**
**Company, Ltd.**
**Washizu-Plant, 2028, Washizu**
**Kosai-shi, Shizuoka-ken(JP)**
Inventor: **Asano, Yasushi, c/o Fuji Kiko**
**Company, Ltd.**
**Washizu-Plant, 2028, Washizu**
**Kosai-shi, Shizuoka-ken(JP)**
Inventor: **Sakon, Hiroshi, c/o Fuji Kiko**
**Company, Ltd.**
**Washizu-Plant, 2028, Washizu**
**Kosai-shi, Shizuoka-ken(JP)**
Inventor: **Saito, Motohiro, c/o Fuji Kiko**
**Company, Ltd.**
**Washuzu-Plant, 2028, Washizu**
**Kosai-shi, Shizuoka-ken(JP)**

(74) Representative: **Patentanwälte Grünecker,**
**Kinkeldey, Stockmair & Partner**
**Maximilianstrasse 58**
**D-8000 München 22(DE)**

(54) **Safety shift-lock device for selector of automatic power transmission.**

(57) A shift-lock device has a locking member (21) associated with a projection member (9) to engage with the locking member for establishing locking engagement. One of the locking member and the projection member is rigidly connected to a selector (13) of an automatic power transmission and the other is rigidly secured to a stationary member (5) in the vehicular body. The locking member (21) is normally and resiliently biased toward locking direction for establishing locking engagement with the projection member (9). The locking member is associated with a lock release actuator (25) which is electrically operable and active for a predetermined period only when a predetermined safety condition is established.

FIG. 1

# SAFETY SHIFT-LOCK DEVICE FOR SELECTOR OF AUTOMATIC POWER TRANSMISSION

## BACKGROUND OF THE INVENTION

### Field of the Invention

The present invention relates generally to a safety shift-lock device for an operational range selector of an automatic power transmission of an automotive vehicle, which locks the selector at a predetermined operational range position, e.g. P- (park) position for disabling shifting of the selector unless a predetermined safety assuring condition is established.

### Description of the Background Art

In the recent years, it becomes trendy for providing a safety shift-lock device for an operational range selector for an automotive automatic power transmission in order to prevent a vehicle from unexpected running upon unconsiously or carelessly shifting the selector from P range position from driving range position, such as D (automatic shift) range position, R (reverse) range position, 1 (first hold) range position, 2 (second hold) range position and so forth. Typically, such safety shift-lock device is designed to establish shift-locking at P range position of the selector and permit to shift to other range position when an ignition switch is maintained at ON position and a foot brake is applied. This arrangement is successful in prevention of unexpected run of the vehicle upon starting up of the vehicle. Japanese Utility Model First (unexamined) Publication (Jikkai) Showa 60-185750 discloses a floor-shift type selector for the automatic power transmission, which selector is associated with a safety shift-lock device for locking the selector at the P range position.

In the shift-lock device proposed in the Japanese prior publication encounters a problem or drawback in liability for a possibility of damaging actuator pin which is active for establishing shift-locking, when relatively great input force is exerted on the selector while the locking engagement is established. When the actuator pin is deformed by the externally applied operation force for the selector, the shift-lock tends to become inoperative, or in the worse case, shift-lock becomes impossible to release. For preventing damaging of the actuator pin, it becomes necessary to make the actuator pin thicker and stronger. However, such increased size of actuator pin naturally leads increasing of the bulk size of a lock actuator resulting in higher production cost, greater weight and lesser freedom in orientation of the actuator.

## SUMMARY OF THE INVENTION

Therefore, it is a principal object of the present invention to provide a safety shift-lock device which can reduce an externally exerted operational force to be exerted on a shift-lock mechanism so as to prevent an actuator pin from causing deformation even when an operational force is externally exerted.

Another object of the invention is to provide a shift-lock device which can maintain the shift-lock device at shift-locking state even when a main power supply therefor is shut down.

In order to accomplish aforementioned and other objects, a shift-lock device, according to the present invention, has a locking member associated with a projection member to engage with the locking member for establishing locking-engagement. One of the locking member and the projection member is rigidly connected to a selector of an automatic power transmission and the other is rigidly secured to a stationary member in the vehicular body. The locking member is normally and resiliently biased toward locking direction for establishing locking engagement with the projection member. The locking member is associated with a lock release actuator which is electrically operable and active for a predetermined period only when a predetermined safety condition is established.

According to one aspect of the invention, a safety shift lock device for an automotive automatic power transmission, comprises:

a selector assembly associated with the automatic power transmission for operating the latter over a plurality of operational range including a specific operational range;

a safety lock mechanism associated with said selector assembly for detecting said selector assembly positioned at aa specific range position corresponding to said specific operational range of said automatic power transmission for establishing locking to prevent the selector assembly from being shifted from said specific range position to other operational range positions;

a detector means for monitoring vehicular condition for detecting establishment of a predetermined safety condition; and

an actuator associated with said safety lock mechanism for operating said safety lock mechanism, said actuator being responsive to said detector means detecting said predetermined safety condition to become active to operate said safety lock mechanism for releasing locking in order to permit said selector assembly to be operated from said specific range position to other operational range positions.

The actuator may be triggered in response to said detector means detecting establishment of said predetermined safety condition and turned into inactive state upon expiration of a predetermined period of time. The safety lock mechanism may lock said selector assembly at said specific range position which corresponds to a parking range position of the automatic power transmission. The detector means may detect engine running state and application of a foot brake to detect establishment of said predetermined safety condition.

The safety lock mechanism may comprise a projection projected from a shaft portion of said selector and a pivotal locking member oriented in the vicinity of said shaft portion of said selector for locking engagement with said projection at said specific range position for preventing said selector from being operated to axially and/or circumferentially offset position from said specific range position. The shaft portion of said selector extends essntially in parallel to a steering column so as to place a steering handle in the vicinity of a steering wheel. The locking member may be pivotally supported on a stationary member of a vehicular body member in such an orientation that it mates with said projection only at said specific range position of said selector. The lock member is associated with said actuator so that it is biased toward the locking position when said actuator is not active and is biased toward lock releasing position when said actuator is active.

The safety shift-lock device may further comprise a position plate associated with said selector assembly for stopping said selector at selected operational range position, said position plate definig a patterned opening having a plurality of recess, and said selector assembly has a selector position locking member engageable with said patterned opening for locking said selector assembly at various range poisitions and a position lock releasing member for operating said selector position locking member for releasing locking engagement with one of said recess. The locking mechanism may be associated with said position lock releasing release position for disabling operation of the latter at said specific range position of said selector. The position lock releasing member is movable in axial direction for shifting said selector position locking member away from said recess, and said lock mechanism is so oriented to mate with the end of said selector position locking member for preventing axial movement of said position lock releasing member. The safety shift-lock device may further comprise a manually operable means associated with said locking member, for permitting manual operation from said locking position to said lock releasing position.

## BRIEF DESCRIPTION OF THE DRAWINGS

The present invention will be understood more fully from the detailed description given herebelow and from the accompanying drawings of the preferred embodiments of the invention, which, however, should not be taken to limit the invention to the specific embodiments but are for explanation and understanding only.

In the drawings:

Fig. 1 is a perspective view of a column-shift type selector assembly for an automatic power transmission, for which the first embodiment of a safety shift-lock device according to the present invention, is applied;

Fig. 2 is an enlarged perspective view of the major portion of the first embodiment of the shift lock device of Fig. 1, which illustrates unlocking state of the shift-lock device;

Fig. 3 is a similar view to Fig. 2 but showing the shift-lock device at a shift-locking state;

Fig. 4 is a further enlarged sectional view of the first embodiment of the shift-lock device and showing the state at which the selector is axially shifted for shifting

Fig. 5 is a perspective view similar to Fig. 2, but showing the selector shifted from P range position to other range position;

Fig. 6 is a fragmentary section taken along line VI - VI of Fig 5;

Fig. 7 is a perspective view of a lock release actuator employed in the first embodiment of the safety shift-lock device of Fig. 2;

Fig. 8 is a side elevation of a floor-shift type selector for an automatic power transmission, for which the second embodiment of a safety shift-lock device according to the invention is applied;

Fig. 9 is a partially section front elevation of the selector of Fig. 8; and

Fig. 10 is an illustration showing co-relation between a bushing and a lock release lever in the second embodiment of the shift-lock device.

## DESCRIPTION OF THE PREFERRED EMBODIMENTS

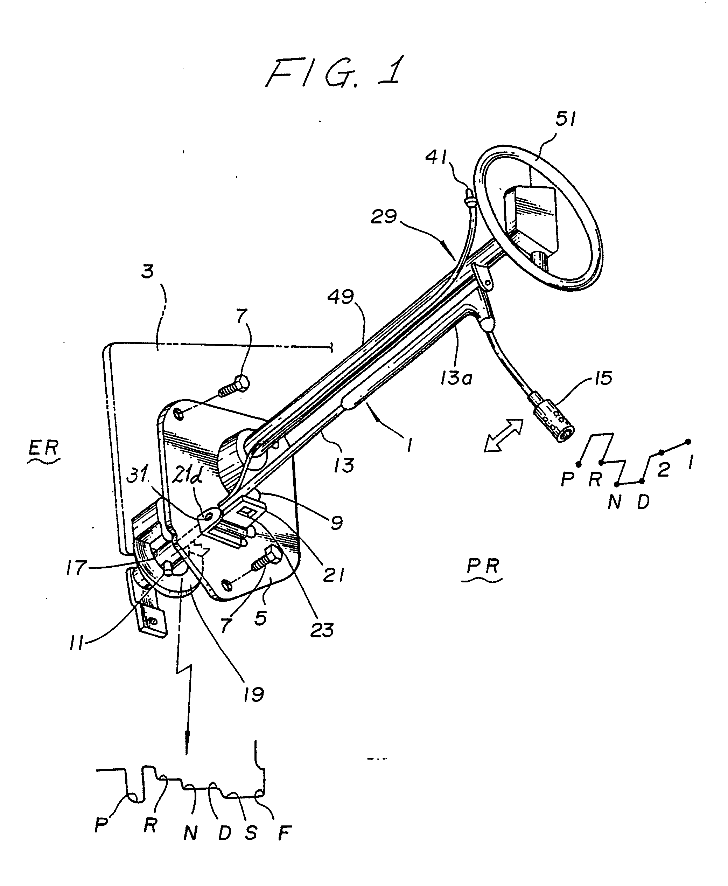

Referring now to the drawings, particularly to Figs. 1 through 7, the first embodiment of a safety shift-lock device, according to the present invention, is applicable for a column-shift type selector

1. The selector 1 includes a selector shaft 13 extending through a mounting bracket 5 which is secured onto a vehicular body member, such as dash panel 3, by means of fastening bolts 7. The selector shaft 13 is formed with a stopper 9 at an orientation adjacent of the mounting bracket 5 within an interior space of a vehicular cabin PR. The selector shaft 13 is also formed with a selecting lever 11 at an orientation adjacent the mounting bracket 5 and the exterior ER of the vehicular cabin. A selector lever 15 is integrally formed with the selector shaft 13 for pivotal or rotational movement and axial movement in selection of the transmission operational ranges. The upper portion 13a of the selector shaft 13, at which the selector shaft adjoins with the selector lever 15, is supported on a steering column shaft for rotation with a steering wheel 51.

A position plate 19 is provided in the vicinity of the mounting bracket 5 and defines the shift patter of the selector lever 15 as exemplified in Fig. 1. As seen, in the shown embodiment, the selector lever 15 is operable over P range position, R range position, N (neutral) range position, D range position, 2 range position and 1 range position for selecting operational range of the automatic power transmission. The position plate 19 is cooperative with the selecting lever 11 to maintain the selector shaft 13 at an angular position corresponding to the selected operational range of the transmission.

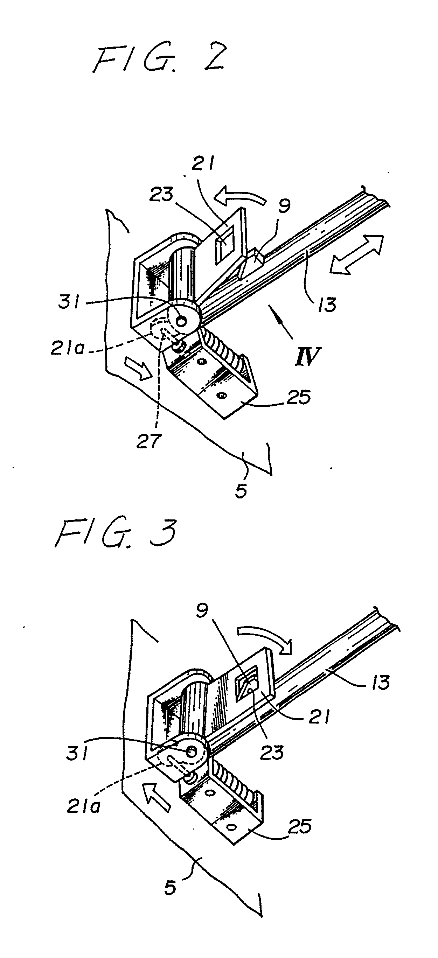

On the other hand, the stopper 9 is cooperative with a pivotal locking member 21 which is pivotally mounted on the mounting bracket 5 via a pivot mechanism 21d for pivotal movement about a pivot shaft 31. The pivotal locking lever 21 is formed with a locking mouth 23. The locking mouth 23 is so oriented to oppose with the stopper 9 at the axial and angular position of the selector shaft 13 corresponding to P range position so that shift-locking engagement with the stopper is established only when the selector 1 is placed at the P range position. The pivotal locking member 21 has an extension 21a. The extension 21a is connected to an actuation rod 27 of an electromagnetic actuator 25, such as a solenoid. The actuator 25 is normally maintained in deenergized state to push the associated extension 21a of the locking member 21 in clockwise direction in Figs. 2 and 3 for forcing the locking member 21 toward the locking position. Therefore, when the selector 1 is shifted at P range position to place the stopper 9 at corresponding position to the locking mouth 23, the locking member 21 enters into locking engagement for preventing the selector shaft 13 from rotating and from axially shifting, as shown in Fig. 2. On the other hand, the actuator 25 is responsive to a predetermined safety assurance condition of the vehicle to be triggered for pull the extension 21a for causing pivotal motion of the locking member 21 in counterclockwise direction toward lock releasing position for permitting rotational and axial movement of the selector shaft 13 from P range position, as shown in Fig. 3. In the shown embodiment, AND condition of ON position of an ignition switch and applied position of a foot brake is required to satisfy the predetermined safety assurance condition. Furthermore, in the shown embodiment, the period to maintain the actuator 25 at the energized state is limited for a predetermined period of time starting from establishing of the predetermined safety assurance condition. The locking member 21 is further associated with a manually operable lock releasing mechanism including a lock release button 41. The lock releasing mechanism is designed to cause counterclockwise pivotal movement of the locking member 21 in response to manual operation of the lock release button 41.

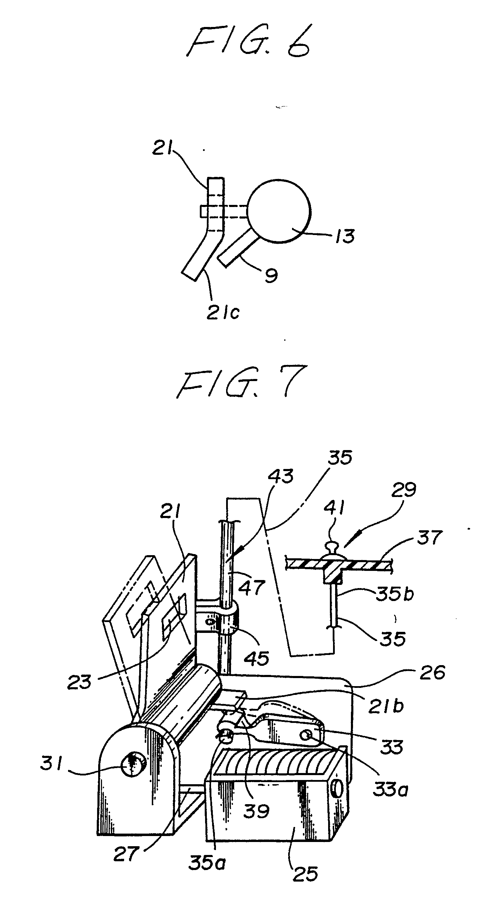

As shown in Fig. 7, the lock release mechanism comprises an extension tang 21b for pivotal movement with the locking member 21. A lock release lever 33 is provided in the vicinity of the extension tang 21b for cooperation therewith. The lock release lever 33 is pivotally supported on a side plate 26 of an actuator housing for pivotal movement about a pivot pin 33a. As can be seen from Fig. 7, the lock release lever 33 has a twisted end section 39 extending substantially in perpendicular to the major section. A wire 35 is provided for connecting the lock release button 41 to the lock release lever 33. The wire 35 is supported essentially in parallel relationship with the steering column 49 by means of one or more guide brackets 45. As can be seen, in the shown embodiment, the end 35a of the wire 35 is connected to the free end of the twisted end section 39. On the other hand, the lock release button 41 is mounted on a steering column cover 37 to permit access from the inside of the vehicular cabin PR.

In order to manually release shift lock, the lock release button 41 is pulled for causing pivotal movement of the lock release lever 33 in clockwise direction as illustrated by the broken line in Fig. 7. The lock release lever 33 as driven to pivotally move in clockwise direction causes contact with the extension tang 21b for forcing the latter to pivot in counterclockwise direction toward the lock release position against the force of the solenoid. Therefore, by pulling the lock release button 41, the shift lock can be manually released.

Assuming that the vehicle is maintained at parking state with placing the selector 1 at P range position and that the vehicle is to be started to run, the actuator 25 is maintained at deenergized position until the condition of ON state of the ignition switch and applied state of the brake is established. Namely, even when the ignition switch is operated to ON position to run the engine, the actuator **25** is maintained at deenergized state if the foot brake is not applied. Therefore, if the driver attempt to shift the selector **1** to the position other than P range position, the interengagement of the locking member **21** and the stopper **9** prevents rotational and axial motion of the selector shaft **13**. By this, shifting operation for selecting other than P range is prevented.

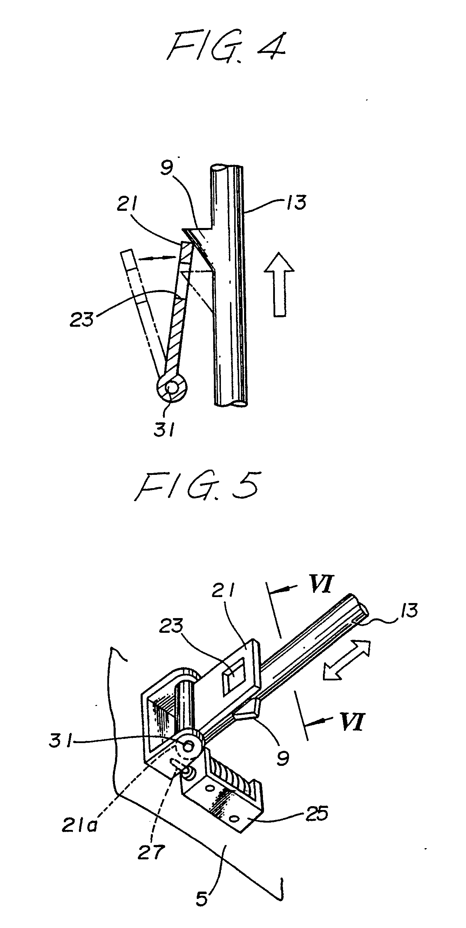

When the foot brake is applied while the engine is held running, the actuator **25** is energized for the predetermined period to shift the locking member **21** to the lock release position. Therefore, within the predetermined period, the selector shaft **13** is maintained free from locking and thus can be operated to the position other than P range position. If the selector **1** is operated during the predetermined period to select the operational range position other than P range position, the position of the stopper **9** offset from the orientation of the locking mouth **23** of the locking lever as shown in **Figs. 4** and **5**. Therefore, establishment of locking engagement will never occur until the selector is again shifted to P range position.

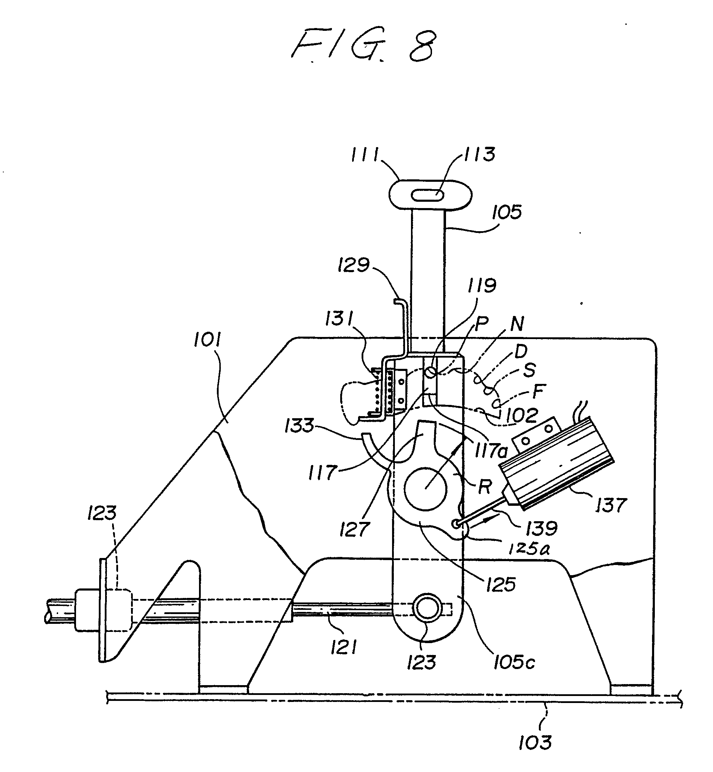

**Figs. 8** through **10** show another embodiment of the shift lock device according to the present invention, which is applied for a floor-shift type selector of the automatic power transmission.

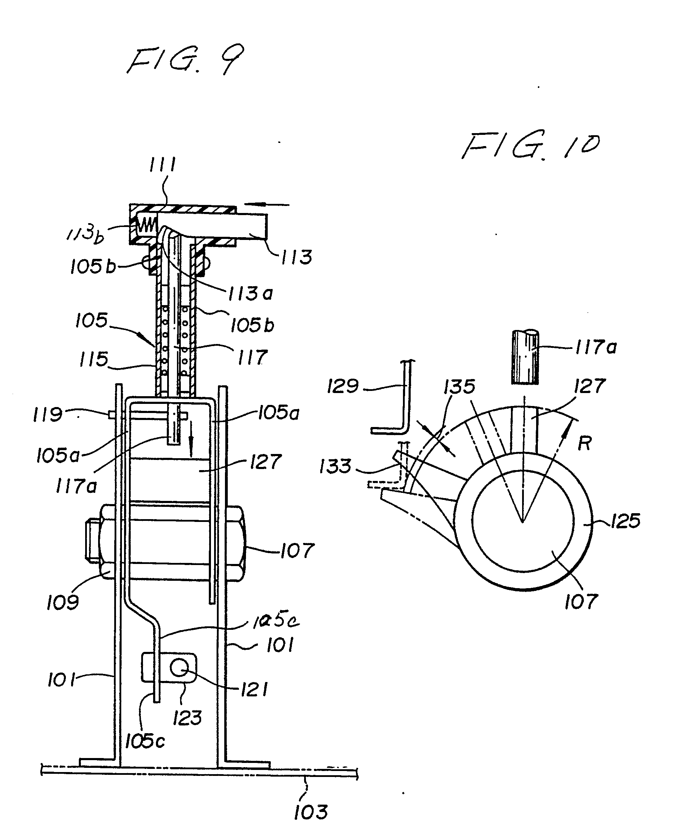

In the floor-shift type selector, a pair of position plates **101** defining a shift pattern of a selector **105**. As can be seen from **Fig. 9**, the position plates **101** are arranged in symmetrical relationship to each other. Similarly to the former embodiment, the selector **105** is shiftable over P range position, R range position, N range position, D range position, 2 range position and 1 range position. The selector lever **105** is provided bifurcated leg portions **105a** which are pivotably secured on the position plates **101** by means of bolt **107** and nut **109**. A cylindrical upper section **105b** of the selector **105** extends upwardly from the bifurcated leg portions **105a**. A selector knob 111 is mounted at the top of the cylindrical upper section **105b** of selector **105**. A compression rod **117** extends through the hollow space of the cylindrical portion **105b** of the selector **105**. The compression rod **117** is normally biased upwardly by means of a return spring **115**. The compression rod **117** carries a position pin **119** which engages with a patterned opening **102** defined in one of the position plates **101**. The patterned opening **102** has a plurality of recesses separated by intermediate lands. The recesses define respective shift position of the selector and thus correspond to respective operational range positions.

A selector knob button **113** is provided for thrusting movement with respect to the selector knob 111. The selector knob button **113** is formed with a tapered portion **113a** in which the top end of the compression rod **117** is normally oriented. For this, a spring **113b** is provided for resiliently biasing the selector knob button **113** is that the tapered portion **113a** normally mate with the top end of the compression rod **117**. At this condition, the position pin **119** is secured within one of the recesses of the patterned opening **102** for locking the selector **105** at the selected operation range position. As can be seen, between the 1 range position and the 2 range position and between the N range position and D rang position, the land separating the recesses are smaller or not provided so that locking engagement between the position pin and the patterned opening will not occur. The locking engagement between the position pin **119** and the patterned opening **102** can be released by depressing the selector knob button **113** to depress the compression rod **117** downwardly.

An operation cable **121** is connected to the lower end of one of the leg **105a** to connect the selector **105** to a speed ratio shifting mechanism in the automatic power transmission. Though the shown embodiment employs the cable **121** for mechanical connection between the selector **105** and the speed ratio shifting mechanism in the automatic power transmission, it may be possible to replace the cable with a known control rod. The cable **21** extends through a a grommet **23** supported on the axial end of the position plate **101**.

A safety lock lever **125** is provided for pivotal movement about the bolt **107** according to pivotal movement of the selector **105** in synchronism therewith.

The safety lock lever **125** has a locking arm **127** integrally formed therewith. The safety lock lever **125** is formed of a synthetic resin. The safety locking lever **125** is so designed to be placed at an angular position to place the locking arm **127** at a position mating with the lower end of the compression rod **117** for preventing the latter from downwardly shifting. The safety lock lever **125** is connected to an actuation rod **139** of an actuator **137** at an extension **125a** which is extended from the major portion of the safety lock lever **125** and oriented essentially at symmetrical position to the locking arm **127**.

Similarly to the foregoing embodiment, the actuator **137** is normally maintained at deenergized position to place the locking lever at the shown position so that the locking arm **127** may prevent the downward movement of the compression rod at P range position of the selector **105**. On the other hand, when the ignition switch is ON and the foot brake is applied, the actuator **137** is energized for a predetermined period for causing counterclockwise rotation in **Fig. 8** of the locking lever **125** to permit downward movement of the compression rod **117** and whereby permitting the selector **105** to be shifted from P range position to other operational range position.

The locking lever **125** also have a lock releasing leg **133**. The upper end of the lock releasing leg **133** is placed to mate with the lower end of a manually operable lock release member **129** which is normally biased in a direction away from the lock releasing leg **133** by means of a spring **131**, at P range position of the selector **105**. With this construction, when the lock release member **129** is manually depressed, the lower end thereof comes into contact with the lock releasing leg **133** to cause the counterclockwise rotation in **Fig. 8** to release safety shift lock.

As can be appreciated herefrom, similarly to the foregoing embodiment, the actuator employed in the shown embodiment is energized only when the safety assurance condition is established and for a predetermined period of time.

Therefore, in either embodiment, fatigue of the actuator may not be promoted at unacceptably high speed. Therefore, the safety shift lock system becomes reliable for a satisfactorily long period.

While the present invention has been disclosed in terms of the preferred embodiment in order to facilitate better understanding of the invention, it should be appreciated that the invention can be embodied in various ways without departing from the principle of the invention. Therefore, the invention should be understood to include all possible embodiments and modifications to the shown embodiments which can be embodied without departing from the principle of the invention set out in the appended claims.

## Claims

1. A safety shift lock device for an automotive automatic power transmission, comprising:
a selector assembly associated with the automatic power transmission for operating the latter over a plurality of operational range including a specific operational range;
a safety lock mechanism associated with said selector assembly for detecting said selector assembly positioned at a a specific range position corresponding to said specific operational range of said automatic power transmission for establishing locking to prevent the selector assembly from being shifted from said specific range position to other operational range positions;
a detector means for monitoring vehicular condition for detecting establishment of a predetermined safety condition; and
an actuator associated with said safety lock mechanism for operating said safety lock mechanism, said actuator being responsive to said detector means detecting said predetermined safety condition to become active to operate said safety lock mechanism for releasing locking in order to permit said selector assembly to be operated from said specific range position to other operational range positions.

2. A safety shift-lock device as set forth in claim 1, wherein said actuator is triggered in response to said detector means detecting establishment of said predetermined safety condition and turned into inactive state upon expiration of a predetermined period of time.

3. A safety shift-lock device as set forth in claim 1, wherein said safety lock mechanism locks said selector assembly at said specific range position which corresponds to a parking range position of the automatic power transmission.

4. A safety shift-lock device as set forth in claim 1, wherein said detector means detects engine running state and application of a foot brake to detect establishment of said predetermined safety condition.

5. A safety shift-lock device as set forth in claim 1, wherein said safety lock mechanism comprises a projection projected from a shaft portion of said selector and a pivotal locking member oriented in the vicinity of said shaft portion of said selector for locking engagement with said projection at said specific range position for preventing said selector from being operated to axially and/or circumferentially offset position from said specific range position.

6. A safety shift-lock device as set forth in claim 5, said shaft portion of said selector extends essentially in parallel to a steering column so as to place a steering handle in the vicinity of a steering wheel.

7. A safety shift-lock device as set forth in claim 6, wherein said locking member is pivotably supported on a stationary member of a vehicular body member in such an orientation that it mates with said projection only at said specific range position of said selector.

8. A safety shift-lock device as set forth in claim 7, wherein said lock member is associated with said actuator so that it is biased toward the locking position when said actuator is not active and is biased toward lock releasing position when said actuator is active.

9. A safety shift-lock device as set forth in claim 8, wherein said actuator is triggered in response to said detector means detecting establishment of said predetermined safety condition and turned into inactive state upon expiration of a predetermined period of time.

10 A safety shift-lock device as set forth in claim 9, wherein said safety lock mechanism locks said selector assembly at said specific range position which corresponds to a parking range position of the automatic power transmission.

11. A safety shift-lock device as set forth in claim 10, wherein said detector means detects engine running state and application of a foot brake to detect establishment of said predetermined safety condition.

12. A safety shift-lock device as set forth in claim 11, which further comprises a manually operable means associated with said locking member, for permitting manual operation from said locking position to said lock releasing position.

13. A safety shift-lock device as set forth in claim 1, which further comprises a position plate associated with said selector assembly for stopping said selector at selected operational range position, said position plate defining a patterned opening having a plurality of recess, and said selector assembly has a selector position locking member engageable with said patterned opening for locking said selector assembly at various range positions and a position lock releasing member for operating said selector position locking member for releasing locking engagement with one of said recess.

14. A safety shift-lock device as set forth in claim 13, wherein said locking mechanism is associated with said position lock releasing release position for disabling operation of the latter at said specific range position of said selector.

15. A safety shift-lock device as set forth in claim 14, said position lock releasing member is movable in axial direction for shifting said selector position locking member away from said recess, and said lock mechanism is so oriented to mate with the end of said selector position locking member for preventing axial movement of said position lock releasing member.

16. A safety shift-lock device as set forth in claim 15, which further comprises a manually operable means associated with said locking member, for permitting manual operation from said locking position to said look releasing position.

# FIG. 1

FIG. 2

FIG. 3

EP 0 390 210 A1

*FIG. 4*

*FIG. 5*

# FIG. 6

21

13

9

21c

# FIG. 7

35

43

41

29

21

37

47

35b

35

23

45

26

21b

33

31

33a

27

35a

39

25

# FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4187935 (O'HERN) <br> * column 3, line 30 – column 4, line 15; figures 1-3 * | 1, 3, 5-8 | F16H61/22 <br> B60K20/02 // <br> F16H59:54 <br> F16H59:74 |
| Y | | 16 | |
| A | | 2, 4, 10-12 | |
| | --- | | |
| X | EP-A-307846 (K K TOKAI RIKA DENKI SEISAKUSHO) <br> * column 6, line 54 – column 8, line 16; figures 5, 6 * | 1, 3-5, 13-15 | |
| Y | | 16 | |
| A | | 2, 5, 7-8, 10-11 | |
| | --- | | |
| X | EP-A-300268 (NISSAN) <br> * column 5, lines 11 – 38; figures 1-4 * | 1, 3-4, 13-15 | |
| A | | 2, 5 | |
| | --- | | |
| X | EP-A-246353 (AUDI) <br> * abstract; claims 1-2, 8, 11; figures 1, 2 * | 1, 3-4 | |
| A | | 2, 5, 13 | TECHNICAL FIELDS SEARCHED (Int. Cl.5 ) |
| | --- | | |
| X | US-A-3942614 (THOMPSON) <br> * column 3, lines 25 – 68; figures 1-3 * | 1, 4 | F16H <br> B60K <br> G05G |
| A | | 4-6, 8, 10 | |
| | --- | | |
| X | US-A-4096930 (VISCARDI) <br> * column 2, line 41 – column 4, line 21; figures 1-4 * | 1, 3 | |
| A | | 5-8, 10-12 | |
| | ----- | | |

The present search report has been drawn up for all claims

| Place of search | Date of completion of the search | Examiner |
|---|---|---|
| THE HAGUE | 16 JULY 1990 | FLODSTROEM J. B. |

EPO FORM 1503 03.82 (P0401)